(19) **Europäisches Patentamt**
**European Patent Office**
**Office européen des brevets**

(11) **EP 2 873 107 B1**

(12) **FASCICULE DE BREVET EUROPEEN**

(45) Date de publication et mention
de la délivrance du brevet:
**17.05.2017 Bulletin 2017/20**

(21) Numéro de dépôt: **13734797.7**

(22) Date de dépôt: **10.07.2013**

(51) Int Cl.:
**H01M 8/02** *(2016.01)*   *H01M 8/1018* *(2016.01)*

(86) Numéro de dépôt international:
**PCT/EP2013/064538**

(87) Numéro de publication internationale:
**WO 2014/009397 (16.01.2014 Gazette 2014/03)**

(54) **PILE À COMBUSTIBLE À ISOLATION ÉLECTRIQUE AMÉLIORÉE**

BRENNSTOFFZELLE MIT VERBESSERTER ELEKTRISCHER ISOLIERUNG

FUEL CELL HAVING IMPROVED ELECTRIC INSULATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.07.2012 FR 1256638**

(43) Date de publication de la demande:
**20.05.2015 Bulletin 2015/21**

(73) Titulaire: **Areva Stockage d'Energie
13547 Aix-en-Provence (FR)**

(72) Inventeur: **QUINTIERI, Christian
F-13100 Aix en Provence (FR)**

(74) Mandataire: **Lavoix
2, place d'Estienne d'Orves
75441 Paris Cedex 09 (FR)**

(56) Documents cités:
**WO-A1-2011/152405    US-A1- 2009 162 732**

**Description**

La présente invention concerne une pile à combustible, du type comprenant un empilement d'au moins une cellule électrochimique, adaptée pour générer un courant électrique à partir d'une réaction d'oxydoréduction entre un fluide oxydant et un fluide réducteur, la ou chaque cellule comprenant une plaque conductrice anodique, délimitant un canal de circulation du fluide réducteur, une plaque conductrice cathodique, délimitant un canal de circulation du fluide oxydant, et une membrane échangeuse d'ions interposée entre les plaques conductrices, ladite membrane formant une barrière pour les électrons libres.

De telles piles à combustibles sont connues et constituent une solution écologique d'apport en énergie électrique.

Un problème rencontré sur certaines piles à combustible est la mise en court-circuit des plaques conductrices. Lorsqu'un tel événement survient, la pile à combustible ne peut pas fonctionner, et risque même d'être endommagée définitivement.

Pour éviter la survenue de tels courts-circuits, il est possible de prolonger la membrane échangeuse d'ions en-dehors de la zone active de la cellule où se produit la réaction d'oxydoréduction. Ainsi, le bord périphérique extérieur de la membrane échangeuse d'ions affleure généralement le bord périphérique extérieur des plaques conductrices. Un joint est le plus souvent interposé entre la membrane et chaque plaque conductrice pour assurer l'étanchéité, ce joint contribuant à l'isolation électrique des plaques.

Toutefois, cette solution ne donne pas satisfaction, dans la mesure où l'ensemble formé des joints et de la membrane échangeuse d'ions est généralement trop fin pour assurer une bonne isolation électrique entre les plaques conductrices. En outre, les lignes de fuite dans l'air à l'extérieur de l'empilement sont très courtes et, les piles à combustible étant généralement utilisées dans une atmosphère humide, il existe un risque important que survienne un claquage diélectrique dans l'air occasionnant un court-circuit entre les plaques conductrices. Enfin, il est possible que, lors d'une opération de manutention de la pile à combustible, un élément conducteur extérieur vienne se loger entre les plaques conductrices et forme un court-circuit entre ces plaques.

Une solution pour compenser le manque d'épaisseur de l'ensemble formé par la membrane et les joints est apportée par JP 2002 352817, qui propose de déposer un matériau isolant électrique à la surface des plaques conductrices, autour de la zone active. Toutefois, un tel dépôt de matériau isolant sur les plaques conductrices constitue une opération coûteuse.

Pour protéger la pile à combustible d'éléments conducteurs extérieurs et éviter les claquages diélectriques dans l'air, il est possible d'enrober l'empilement dans une résine isolante. Cette solution est cependant très contraignante, dans la mesure où elle impose une opération supplémentaire dans la fabrication de la pile à combustible, gêne la dissipation thermique en fonctionnement, et s'oppose à la dilatation thermique des plaques conductrices en fonctionnement. En outre, la maintenance de la pile à combustible est compliquée par la présence de cette enveloppe en résine.

Les solutions précitées ne donnent donc pas entière satisfaction.

US 2009/0162732 divulgue par ailleurs une pile à combustible dans laquelle le bord périphérique extérieur des membranes échangeuses d'ions dépasse légèrement vers l'extérieur par rapport au bord périphérique extérieur des plaques conductrices. Cette caractéristique a toutefois pour seule fonction de permettre une identification aisée des faces cathodique et anodique de la membrane par un assembleur.

Un objectif de l'invention est de proposer une pile à combustible peu coûteuse, adaptée pour éviter la survenue de court-circuit entre les plaques conductrices de la pile, et de maintenance facile.

A cet effet, l'invention a pour objet une pile à combustible du type précité, dans laquelle la membrane est disposée relativement aux plaques conductrices de sorte qu'un bord périphérique extérieur de la membrane dépasse vers l'extérieur de l'empilement par rapport aux plaques conductrices, de façon à allonger les lignes de fuite aériennes entre lesdites plaques conductrices.

Dans des modes de réalisation particuliers de l'invention, la pile à combustible présente l'une ou plusieurs des caractéristiques suivantes, prise(s) isolément ou suivant toute(s) combinaison(s) techniquement possible(s) :

-   le bord périphérique extérieur de la membrane est laissé libre ;
-   chaque plaque conductrice présente un bord extérieur périphérique qui est à une distance D du bord extérieur périphérique de l'autre plaque conductrice, et en ce que le bord périphérique extérieur de la membrane dépasse d'une longueur L par rapport aux plaques conductrices, de sorte que la relation suivante est vérifiée : $2 \times L + D \geq 1\,mm$ ;
-   la longueur L est supérieure à 0,3 mm ;
-   la distance D est strictement inférieure à 0,5 mm, et de préférence strictement inférieure à 0,4mm ;
-   une couche isolante électrique solide est interposée entre un bord extérieur périphérique de chaque plaque conductrice et la membrane ;
-   le bord extérieur périphérique de chaque plaque conductrice est distant de plus de 0,4 mm du bord extérieur périphérique de l'autre plaque conductrice.

D'autres caractéristiques et avantages de l'invention apparaîtront à la lecture de la description qui va suivre, donnée uniquement à titre d'exemple et faite en se référant aux dessins annexés, sur lesquels :

- **-** la Figure 1 est une vue en coupe d'une moitié d'une pile à combustible selon l'invention, et
- **-** la Figure 2 est une vue en coupe d'un détail de la pile à combustible, selon une variante de l'invention.

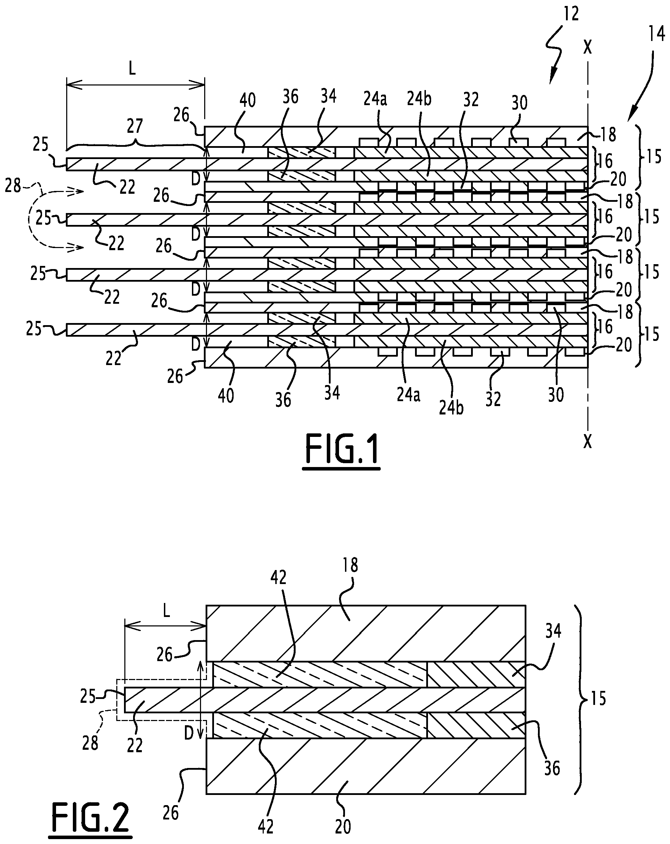

La pile à combustible 12, représenté sur la Figure 1, est adaptée pour produire un courant électrique par une réaction d'oxydoréduction entre un fluide oxydant et un fluide réducteur. A cet effet, elle comprend un empilement 14 de cellules électrochimiques 15, empilées selon une direction longitudinale X d'empilement.

Pour des raisons de simplification, seule une moitié de la pile 12, coupée selon un plan longitudinal médian, a été représentée.

Chaque cellule 15 comprend un assemblage membrane-électrode 16 intercalé selon la direction longitudinale X entre une plaque conductrice anodique 18 et une plaque conductrice cathodique 20.

L'assemblage membrane-électrode 16 comprend une membrane 22 d'échange d'ions prise en sandwich selon la direction longitudinale X entre une anode 24a et une cathode 24b.

La membrane 22 sépare les fluides oxydant et réducteur.

La membrane 22 est généralement une membrane d'échange de protons, adaptée pour ne laisser que des protons la traverser. En particulier, la membrane 22 forme une barrière aux électrons libres. Ainsi, elle isole électriquement l'anode 24a de la cathode 24b, et la plaque anodique 18 de la plaque cathodique 20.

La membrane 22 est typiquement en matériau polymère.

Un bord périphérique extérieur 25 de la membrane 22 dépasse vers l'extérieur de la cellule 15 par rapport à l'anode 24a et à la cathode 24b, perpendiculairement à la direction longitudinale X. Le bord périphérique extérieur 25 dépasse sur toute la circonférence de la membrane 22, de sorte qu'il s'étend autour de l'anode 24a et de la cathode 24b dans un plan perpendiculaire à la direction longitudinale X. Ainsi, l'anode 24a et la cathode 24b n'affleurent en aucun lieu le bord périphérique extérieur 25 de la membrane 22.

L'anode 24a et la cathode 24b comprennent chacune un catalyseur, typiquement du platine ou un alliage de platine, pour faciliter la réaction. Elles sont disposées au droit l'une de l'autre de part et d'autre de la membrane 22, et définissent ensemble une zone active de la cellule 15 où se produit la réaction d'oxydoréduction.

Chaque plaque conductrice 18, 20 présente un bord extérieur périphérique 26. Les bords extérieurs périphériques 26 des plaques conductrices 18, 20 sont sensiblement alignés suivant la direction longitudinale X. Le bord extérieur périphérique 26 de chaque plaque conductrice 18, 20 dépasse vers l'extérieur de l'empilement 14 par rapport à l'anode 24a et à la cathode 24b, perpendiculairement à la direction longitudinale X, sur toute la circonférence de la plaque conductrice 18, 20.

Le bord extérieur périphérique 26 de la plaque anodique 18 est à une distance D, prise selon la direction longitudinale X, du bord extérieur périphérique 26 de la plaque cathodique 20.

Le bord périphérique extérieur 25 de la membrane 22 dépasse vers l'extérieur de l'empilement 14 par rapport aux plaques conductrices 18, 20, perpendiculairement à la direction longitudinale X. Le bord périphérique extérieur 25 dépasse sur toute la circonférence de la membrane 22 en faisant saillie des plaques conductrices 18, 20 sur toute la circonférence des plaques conductrices 18, 20 dans un plan perpendiculaire à la direction longitudinale X. Ainsi, les plaques conductrices 18, 20 n'affleurent en aucun lieu le bord périphérique extérieur 25 de la membrane 22.

Le bord périphérique extérieur 25 dépasse d'une longueur L par rapport aux plaques conductrices 18, 20, la longueur L étant mesurée entre le bord périphérique extérieur 25 et le projeté orthogonal, selon la direction longitudinale X, du bord extérieur périphérique 26 de chaque plaque conductrice 18, 20 sur la membrane 22. De préférence, la longueur L est supérieure ou égale à 0,2 mm, en particulier à 0,3 mm.

En tout état de cause, la longueur L vérifie avec la distance D la relation suivante :

$$2 \times L + D \geq 0{,}4\,mm \text{, en particulier } 2 \times L + D \geq 1\,mm$$

Ainsi les lignes de fuites aériennes entre les plaques conductrices 18, 20 d'une même cellule, matérialisées sur la Figure 1 par le trait pointillé 28, ont une longueur supérieure à 0,4 mm, en particulier supérieure à 1 mm. Les conditions d'isolation électrique imposées par les normes CEI 62282-2 et CEI 62282-3-1 sont donc respectées.

De préférence, la région périphérique extérieure 27 de la membrane 22, comprise entre le bord extérieur périphérique 26 de chaque plaque 18, 20 et le bord périphérique extérieur 25 de la membrane 22, est laissée libre. Ainsi, elle n'est pas prise dans une matrice de matériau, par exemple une matrice de résine isolante.

La plaque anodique 18 délimite un conduit anodique 30 pour la circulation du fluide réducteur le long de l'anode 24a et en contact avec celle-ci. Pour ce faire, la plaque 18 est munie d'au moins un canal ménagé dans la face de la plaque 18 tournée vers l'assemblage membrane-électrode 16 et refermé par ledit assemblage membrane électrode 16. La plaque anodique 18 est formée d'un matériau conducteur électriquement, typiquement du graphite. Le fluide réducteur utilisé est un fluide comprenant du dihydrogène, comme par exemple du dihydrogène pur.

La plaque cathodique 20 délimite un conduit cathodique 32 pour la circulation du fluide oxydant le long de la cathode 24b et en contact avec celle-ci. Pour ce faire, la plaque 20 est munie d'au moins un canal ménagé dans la face de la plaque 20 tournée vers l'assemblage membrane-électrode 16 et refermé par ledit assemblage membrane électrode 16. La plaque cathodique 20 est formée d'un matériau conducteur électriquement, typiquement du graphite. Le fluide oxydant utilisé est un fluide comprenant du dioxygène, comme par exemple du dioxygène pur ou un mélange d'air et de dioxygène.

L'anode 24a est en contact électrique avec la plaque anodique 18. La cathode 24b et est en contact électrique avec la plaque cathodique 20. C'est au niveau de l'anode 24a qu'a lieu l'oxydation du fluide réducteur et que les électrons et les protons sont générés. Les électrons transitent ensuite via la plaque anodique 18 vers la cathode 24b d'une cellule 15 voisine, pour participer à la réduction du fluide oxydant dans la cellule 15 voisine.

Dans l'empilement 14, la plaque anodique 18 de chaque cellule 15 est en contact avec la plaque cathodique 20 de la cellule 15 voisine. Les plaques conductrices 18, 20 assurent ainsi le transfert des électrons du fluide réducteur circulant dans une des cellules 15 de l'empilement 14 vers le fluide oxydant circulant dans une autre cellule 15 de l'empilement 14. De préférence, un canal (non représenté) pour la circulation d'un fluide de refroidissement est formé à l'interface entre les plaques anodique 18 et cathodique 20.

En variante, les plaques anodique 18 et cathodique 20 de deux cellules 15 voisines de l'empilement 14 sont venues de matière et forment ensemble une plaque bipolaire.

La cellule 15 comprend en outre des joints 34, 36 pour assurer l'étanchéité entre les plaques conductrices 18, 20 d'une part et l'assemblage membrane-électrode 16 d'autre part. Un premier joint 34 est interposé selon la direction longitudinale X entre la plaque conductrice anodique 18 et la membrane 22, et un deuxième joint 36 est interposé selon la direction longitudinale X entre la plaque conductrice cathodique 20 et la membrane 22, au droit du premier joint 34. Chaque joint, respectivement 34, 36, s'étend autour de l'anode 24a, respectivement de la cathode 24b.

Les cellules 15 sont maintenues empilées grâce à des plaques de serrage (non représentées) disposées aux extrémités longitudinales de l'empilement 14. Des boulons de serrage (non représentés) exercent une force de serrage sur ces plaques pour les maintenir en compression contre les cellules 15.

Dans la variante représentée sur la Figure 1, le bord extérieur périphérique 26 de chaque plaque conductrice 18, 20 est à distance de la membrane 22 suivant la direction longitudinale X. En d'autres termes, le bord extérieur périphérique 26 est espacé de la membrane 22. La distance D est supérieure à l'épaisseur de la membrane 22.

En particulier, un espace vide 40 est ménagé entre le bord extérieur périphérique 26 de chaque plaque conductrice 18, 20 et la membrane 22. Aucun élément solide n'est disposé dans cet espace vide 40. La fabrication de l'empilement 14 est ainsi facilitée.

La distance D est alors de préférence strictement inférieure à 0,4 mm. Ainsi, l'encombrement de l'empilement 14 est limité.

Dans la variante représentée sur la Figure 2, une couche 42 de matériau isolant électrique, typiquement de résine, est déposée entre le bord extérieur périphérique 26 de chaque plaque conductrice 18, 20 et la membrane 22. Chaque couche 42 remplit l'espace entre le bord extérieur périphérique 26 de la plaque conductrice 18, 20 correspondante et la membrane 22. Le bord périphérique extérieur 25 de la membrane 22 dépasse des couches 42 de matériau isolant interposée entre la membrane 22 et chaque plaque conductrice 18, 20, perpendiculairement à la direction longitudinale X.

Les couches 42 de matériau isolant et la membrane 22 évitent le dépôt d'élément conducteur entre les plaques conductrices 18, 20.

La distance D est alors supérieure à 0,4 mm, pour respecter les normes CEI 62282-2 et CEI 62282-3-1.

Grâce à l'invention, la survenue de court-circuit entre les plaques conductrices 18, 20 d'une même cellule 15 est évitée, à moindre coût. En particulier, les lignes de fuite aériennes entre les plaques 18, 20 sont suffisamment longues pour éviter tout risque de claquage diélectrique, et les plaques 18, 20 sont protégées d'éventuels éléments conducteurs extérieurs qui viendraient au contact de l'empilement 14.

En outre, l'accès aux éléments de l'empilement 14 est facilité, ce qui permet une maintenance aisée de la pile 12.

## Revendications

**1.** Pile à combustible (12) comprenant un empilement (14) d'au moins une cellule électrochimique (15), adaptée pour générer un courant électrique à partir d'une réaction d'oxydoréduction entre un fluide oxydant et un fluide réducteur, la ou chaque cellule (15) comprenant une plaque conductrice anodique (18), délimitant un canal (30) de circulation du fluide réducteur, une plaque conductrice cathodique (20), délimitant un canal (32) de circulation du fluide oxydant, et une membrane échangeuse d'ions (22) interposée entre les plaques conductrices (18, 20), chaque plaque conductrice (18, 20) présentant un bord extérieur périphérique (26) qui est à une distance D du bord extérieur périphérique (26) de l'autre plaque conductrice (18, 20), et la membrane (22) formant une barrière pour les électrons libres et étant disposée relativement aux plaques conductrices (18, 20) de sorte qu'un bord périphérique extérieur (25) de la membrane (22) dépasse d'une longueur L vers l'extérieur de l'empilement (14) par rapport aux plaques conductrices (18, 20), **caractérisée en ce que** la relation suivante est vérifiée : $2 \times L + D \geq 0{,}4 mm$, de sorte que la membrane (22) allonge les lignes de fuite aériennes (28) entre les plaques conductrices (18, 20).

2. Pile à combustible (12) selon la revendication 1, **caractérisée en ce que** le bord périphérique extérieur (25) de la membrane (22) est laissé libre.

3. Pile à combustible (12) selon la revendication 1 ou 2, **caractérisée en ce que** la relation suivante est vérifiée : $2 \times L + D \geq 1 mm$.

4. Pile à combustible (12) selon l'une quelconque des revendications précédentes, **caractérisée en ce que** la distance D est strictement inférieure à 0,5 mm, et de préférence strictement inférieure à 0,4mm.

5. Pile à combustible (12) selon l'une quelconque des revendications 1 à 3, **caractérisée en ce qu'**une couche (42) isolante électrique solide est interposée entre un bord extérieur périphérique (26) de chaque plaque conductrice (18, 20) et la membrane (22).

6. Pile à combustible (12) selon la revendication 5, **caractérisée en ce que** le bord extérieur périphérique (26) de chaque plaque conductrice (18, 20) est distant de plus de 0,4 mm du bord extérieur périphérique (26) de l'autre plaque conductrice (18, 20).

7. Pile à combustible (12) selon l'une quelconque des revendications précédentes, **caractérisée en ce que** la longueur L est supérieure à 0,2 mm.

8. Pile à combustible (12) selon la revendication 7, **caractérisée en ce que** la longueur L est supérieure à 0,3 mm.

**Patentansprüche**

1. Brennstoffzelle (12), umfassend einen Stapel (14) von mindestens einer elektrochemischen Zelle (15), die geeignet ist, einen elektrischen Strom aus einer Redox-Reaktion zwischen einem Oxidationsfluid und einem Reduktionsfluid zu erzeugen, wobei die oder jede Zelle (15) eine leitende Anodenplatte (18),die einen Strömungskanal (30) für das Reduktionsfluid begrenzt, eine leitende Kathodenplatte (20), die einen Strömungskanal für das Oxidationsfluid begrenzt, und eine Ionenaustauschmembran (22), die zwischen den leitenden Platten (18, 20) angeordnet ist, umfasst, wobei jede leitende Platte (18, 20) einen Umfangsaußenrand (26) aufweist, der in einem Abstand D vom Umfangsaußenrand (26) der anderen leitenden Platte (18, 20) liegt, und die Membran (22) eine Sperre für die freien Elektronen bildet und relativ zu den leitenden Platten (18, 20) derart angeordnet ist, dass ein Außenumfangsrand (25) der Membran (22) die leitenden Platten (18, 20) nach außen in Bezug auf den Stapel um eine Länge L überragt, **dadurch gekennzeichnet, dass** die folgende Beziehung erfüllt ist: $2xL + D \geq 0{,}4$ m, derart, dass die Membran (22) die Luftkriechstrecken (28) zwischen den leitenden Platten(18, 20) verlängert.

2. Brennstoffzelle (12) nach Anspruch 1, **dadurch gekennzeichnet, dass** der Außenumfangsrand (25) der Membran (22) freigelassen wird.

3. Brennstoffzelle (12) nach Anspruch 1 oder 2, **dadurch gekennzeichnet, dass** die folgende Beziehung erfüllt wird: $2xL + D \geq 1$ mm.

4. Brennstoffzelle (12) nach einem beliebigen der vorhergehenden Ansprüche, **dadurch gekennzeichnet, dass** der Abstand D streng kleiner als 0,5 mm ist und vorzugsweise streng kleiner als 0,4 mm ist.

5. Brennstoffzelle (12) nach einem beliebigen der Ansprüche 1 bis 3, **dadurch gekennzeichnet, dass** eine feste elektrische isolierende Schicht (42) zwischen einem Umfangsaußenrand (26) jeder leitenden Platte (18, 20) und der Membran (22) angeordnet ist.

6. Brennstoffzelle (12) nach Anspruch 5, **dadurch gekennzeichnet, dass** der Umfangsaußenrand (26) jeder leitenden Platte (18, 20) von dem Umfangsaußenrand (26) der anderen leitenden Platte (18, 20) um mehr als 0,4 mm beabstandet ist.

**7.** Brennstoffzelle (12) nach einem beliebigen der vorhergehenden Ansprüche, **dadurch gekennzeichnet, dass** die Länge L größer als 0,2 mm ist.

**8.** Brennstoffzelle (12) nach Anspruch 7, **dadurch gekennzeichnet, dass** die Länge L größer als 0,3 mm ist.

**Claims**

**1.** A fuel cell (12) comprising a stack (14) of at least one electrochemical cell (15), suitable for generating electric current from an oxidation-reduction reaction between an oxidizing fluid and a reducing fluid, said or each cell (15) comprising an anode conductive plate (18), delimiting a channel (30) for circulation of the reducing fluid, a cathode conductive plate (20), delimiting a channel (32) for circulation of the oxidizing fluid, and an ion exchanger membrane (22) interposed between the conductive plates (18, 20), each conductive plate (18,20) having a peripheral outer edge (26) which is at a distance D from the peripheral outer edge (26) of the other conductive plate (18, 20), and the membrane (22) forming a barrier for free electrons and being disposed relatively to the conductive plates (18, 20) so as a peripheral outer edge (25) of the membrane (22) juts out by a length L towards the outside of the stack (14) relatively to the conductive plates (18, 20) **characterized in that** the following relationship is verified: $2{\times}L+D{\geq}0.4mm,$ so as the membrane (22) elongates the air leak lines (28) between the conductive plates (18, 20).

**2.** The fuel cell (12) according to claim 1, **characterized in that** the outer peripheral edge (25) of the membrane (22) is left free.

**3.** The fuel cell (12) according to claim 1 or 2, **characterized in that** the following relationship is verified: $2{\times}L+D{\geq}1mm.$

**4.** The fuel cell (12) according to any of preceding claims, **characterized in that** the distance D is strictly less than 0.5 mm, and preferably strictly less than 0.4 mm.

**5.** The fuel cell (12) according to any of claims 1 to 3, **characterized in that** a solid electric insulating layer (42) is interposed between a peripheral outer edge (26) of each conductive plate (18, 20) and the membrane (22).

**6.** The fuel cell (12) according to claim 5, **characterized in that** the peripheral outer edge (26) of each conductive plate (18, 20) is distant by more than 0.4 mm from the peripheral outer edge (26) of the other conductive plate (18, 20).

**7.** The fuel cell (12) according to any of the preceding claims, **characterized in that** the outer peripheral edge (25) of the membrane (22) juts out by a length L relatively to the conductive plates (18, 20), the length L being greater than 0.2 mm.

**8.** The fuel cell (12) according to claim 7, **characterized in that** the length L is greater than 0.3 mm.

FIG.1

FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2002352817 A
- US 20090162732 A